(19) Europäisches Patentamt / European Patent Office / Office européen des brevets

(11) **EP 3 547 307 B1**

(12) **EUROPEAN PATENT SPECIFICATION**

(45) Date of publication and mention
of the grant of the patent:
**14.07.2021 Bulletin 2021/28**

(21) Application number: **17874030.4**

(22) Date of filing: **28.11.2017**

(51) Int Cl.:
*D04H 3/016* (2012.01)          *D04H 3/04* (2012.01)
*D04H 3/14* (2012.01)          *B60R 13/08* (2006.01)
*B32B 5/02* (2006.01)          *B32B 5/26* (2006.01)
*G10K 11/162* (2006.01)          *G10K 11/168* (2006.01)

(86) International application number:
**PCT/JP2017/042683**

(87) International publication number:
**WO 2018/097326 (31.05.2018 Gazette 2018/22)**

(54) **NONWOVEN FABRIC FOR SOUND-ABSORBING MATERIAL AND SOUND-ABSORBING MATERIAL USING SAME**

VLIESSTOFF FÜR EIN SCHALLABSORBIERENDES MATERIAL UND SCHALLABSORBIERENDES MATERIAL DAMIT

TISSU NON TISSÉ POUR MATÉRIAU INSONORISANT ET MATÉRIAU INSONORISANT UTILISANT LEDIT TISSU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2016 JP 2016230410**
           **09.08.2017 JP 2017154343**

(43) Date of publication of application:
**02.10.2019 Bulletin 2019/40**

(73) Proprietor: **JXTG Nippon Oil & Energy Corporation**
**Chiyoda-ku**
**Tokyo 100-8162 (JP)**

(72) Inventors:
• **IBAYASHI, Kunihiko**
  **Chiyoda-ku, Tokyo 100-8162 (JP)**
• **HIRAI, Tomoo**
  **Chiyoda-ku, Tokyo 100-8162 (JP)**
• **KONISHI, Hiroaki**
  **Chiyoda-ku, Tokyo 100-8162 (JP)**
• **SHIINA, Muneyuki**
  **Chiyoda-ku, Tokyo 100-8162 (JP)**
• **ENDO, Ken**
  **Sanbu-gun, Chiba 289-1624 (JP)**
• **WAKAYAMA, Masahiro**
  **Sanbu-gun, Chiba 289-1624 (JP)**

(74) Representative: **Grünecker Patent- und Rechtsanwälte**
**PartG mbB**
**Leopoldstraße 4**
**80802 München (DE)**

(56) References cited:
**EP-A1- 0 564 784          EP-A1- 1 081 262**
**EP-A1- 3 547 306          EP-A2- 1 234 905**
**WO-A1-99/44817          JP-A- H10 240 269**
**JP-A- 2000 334 867          JP-A- 2004 076 237**
**JP-A- 2008 036 880          JP-A- 2009 275 801**
**JP-A- 2011 246 839**

## Description

### TECHNICAL FIELD

The present invention relates to a nonwoven fabric for sound absorbing application suitable for being laminated on a porous sound absorbing material, and relates to a sound absorbing material using the nonwoven fabric for sound absorbing application.

### BACKGROUND ART

Heretofore, sound absorbing materials have been used in various products such as vehicles, houses, and electrical products in order mainly to reduce noise. The sound absorbing materials are grouped into several classes according to their materials and shapes. Porous sound absorbing materials (such as felts, glass wools, and polyurethane foams) are known as one such class (see, for example, Patent Document 1).

Nonwoven fabrics comprising drawn filaments arranged and oriented in one direction are disclosed in, for example, Patent Documents 2 and 3.

Patent Document 4 discloses a sound absorbent laminate comprising a meltblown microfibre layer.

### REFERENCE DOCUMENT LIST

### PATENT DOCUMENT

Patent Document 1: JP 2005-195989 A

Patent Document 2: EP 1 081 262 A1

Patent Document 3: EP 1 234 905 A2

Patent Document 4: WO 99/44817

### SUMMARY OF THE INVENTION

### PROBLEM TO BE SOLVED BY THE INVENTION

The porous sound absorbing materials are lightweight, flexible, and relatively easy to handle. For these reasons, the porous sound absorbing materials are being used for a greater number of purposes in recent years, and thus, they are required to have further improved sound absorption performance.

### MEANS FOR SOLVING THE PROBLEM

The present inventors found that when a nonwoven fabric that satisfies specific conditions is laminated on the porous sound absorbing material, the resultant material has significantly improved sound absorption performance in the frequency band of 1000 to 10000 Hz as compared to the porous sound absorbing material alone and still remains light in weight, flexible, and easy to handle, substantially comparable to the porous sound absorbing material. The present invention has been made in view of this finding.

An aspect of the present invention provides a nonwoven fabric for sound absorbing application adapted to be laminated on the porous sound absorbing material. The nonwoven fabric for sound absorbing application according to the present invention includes a plurality of drawn filament (drawn long fibers) arranged and oriented in one direction, and the mode value of the diameter distribution of the plurality of filaments is 1 to 4 $\mu$m.

### EFFECTS OF THE INVENTION

When laminated on the porous sound absorbing material, the nonwoven fabric for sound absorbing application according to the present invention constitutes a sound absorbing material with the porous sound absorbing material, and the resultant laminated sound absorbing material has significantly improved sound absorption performance in the frequency band of 1000 to 10000 Hz as compared to the porous sound absorbing material alone.

BRIEF DESCRIPTION OF THE DRAWINGS

FIG. 1 is an enlarged photograph (with 1000× magnification) of an example of a nonwoven fabric for sound absorbing application according to the present invention, photographed by a scanning electron microscope.

FIG. 2 is a cross-sectional view of a most fundamental lamination form of the nonwoven fabric for sound absorbing application and a porous sound absorbing material.

FIG. 3 is a view (partial cross-sectional view) showing a schematic configuration of an example of a manufacturing apparatus of a longitudinally oriented filament nonwoven fabric, which is a first embodiment of the nonwoven fabric for sound absorbing application.

FIG. 4 is a view (partial cross-sectional view) showing a schematic configuration of a first manufacturing apparatus of a transversely oriented filament nonwoven fabric, which is a second embodiment of the nonwoven fabric for sound absorbing application.

FIGS. 5A and 5B show a configuration of a main part of a second manufacturing apparatus of the transversely oriented filament nonwoven fabric: FIG. 5A is a front view (partial cross-sectional view) of the second manufacturing apparatus of the transversely oriented filament nonwoven fabric; and FIG. 5B is a side view (partial cross-sectional view) of the second manufacturing apparatus of the transversely oriented filament nonwoven fabric.

FIGS. 6A and 6B show a spinning head used in the second manufacturing apparatus of the transversely oriented filament nonwoven fabric shown in FIGS. 5A and 5B: FIG. 6A is a cross-sectional view of the spinning head; and FIG. 6B is a bottom view of the spinning head.

FIGS. 7A to 7C show a modified example of the spinning head: FIG. 7A is a cross-sectional view of the spinning head according to the modified example; FIG. 7B is a bottom view of the spinning head according to the modified example; and FIG. 7C is a cross-sectional view of the spinning head according to the modified example, taken in the direction orthogonal to that of FIG. 7A.

FIG. 8 is a table showing the physical properties of the longitudinally oriented filament nonwoven fabric.

FIG. 9 shows the filament diameter distribution of the longitudinally oriented filament nonwoven fabric.

FIG. 10 is a graph showing the measurements of the normal incident sound absorption coefficient for Examples 1 to 5 ("nonwoven fabric" + "PET felt") and Comparative Example 1 ("PET felt" alone) and Comparative Example 2 ("nonwoven fabric" alone).

FIG. 11 is a graph showing the measurements of the normal incident sound absorption coefficient for Example 4, Comparative Example 1, and Reference Example 1 ("nonwoven fabric" × 3 + "PET felt").

MODES FOR CARRYING OUT THE INVENTION

The present invention provides a nonwoven fabric for sound absorbing application, which is suitable for being laminated on a porous sound absorbing material (such as a felt, a glass wool, or a polyurethane foam). When laminated on the porous sound absorbing material, the nonwoven fabric for sound absorbing application according to the present invention constitutes a sound absorbing material with the porous sound absorbing material. As will be described later, the resultant laminated sound absorbing material has improved sound absorption performance in the frequency band of 1000 to 10000 Hz as compared to the porous sound absorbing material alone.

The nonwoven fabric for sound absorbing application according to the present invention is a so-called filament (long-fiber) nonwoven fabric, and includes a plurality of drawn filaments (drawn long fibers) arranged and oriented in one direction. The mode value of the diameter distribution of these filaments is in the range of 1 to 4 μm.

For example, the nonwoven fabric for sound absorbing application according to the present invention may be a "unidirectionally oriented nonwoven fabric", which includes a plurality of drawn filaments arranged and oriented in one direction. As used herein, the "one direction" does not necessarily refer strictly to a single direction, but merely refers to being substantially in a single direction. The unidirectionally oriented nonwoven fabric as described above may be produced through production steps including arranging and orienting a plurality of filaments in one direction, and drawing the plurality of arranged and oriented filaments in the one direction, for example.

As used herein, "arranging and orienting a plurality of filaments in one direction" indicates arranging and orienting the plurality of filaments so that the length direction (axial direction) of each filament coincides with the one direction, that is, so that the arranged and oriented filaments extend substantially in the one direction. For example, when the unidirectionally oriented nonwoven fabric is manufactured in a long sheet form, the one direction may be the lengthwise direction (also referred to as "longitudinal direction") of the long sheet, or a direction inclined with respect to the lengthwise direction of the long sheet, or the width direction (also referred to as "transverse direction") of the long sheet, or a direction inclined with respect to the transverse direction of the long sheet. Also as used herein, "drawing the plurality of arranged and oriented filaments in the one direction" indicates drawing each of the plurality of filaments substantially in its axial direction. By drawing the plurality of filaments in one direction after arranging and orienting the filaments in the one direction, molecules in each filament are oriented in the one direction in which the filament is drawn, that is, in the axial direction of the filament.

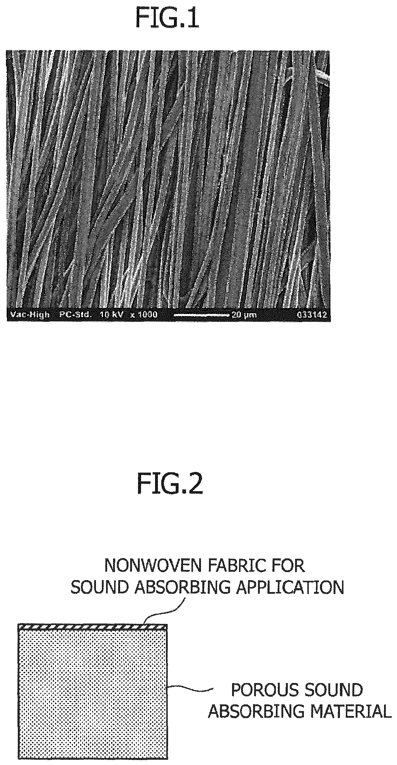

FIG. 1 is an enlarged photograph (with $1000\times$ magnification) of the unidirectionally oriented nonwoven fabric, an example of a nonwoven fabric for sound absorbing application according to the present invention, photographed by a scanning electron microscope. In the unidirectionally oriented nonwoven fabric shown in FIG. 1, filaments are oriented substantially in the up-down direction of FIG. 1.

In addition to the drawn filaments arranged and oriented in one direction (first filaments), the nonwoven fabric for sound absorbing application according to the present invention may further include second filaments that are drawn filaments arranged and oriented in a direction orthogonal to the one direction. In other words, the nonwoven fabric for sound absorbing application according to the present invention may be an "orthogonally oriented nonwoven fabric", which includes a plurality of drawn filaments arranged and oriented in two directions that are orthogonal to each other. As used herein, these two "orthogonal" directions do not have to be strictly orthogonal, but have merely to be substantially orthogonal. The orthogonally oriented nonwoven fabric as described above may be produced, for example, by stacking and fusing two sheets of a unidirectionally oriented nonwoven fabric together in an arrangement in which filaments in one of these two sheets are orthogonal to filaments in the other. Here, in the orthogonally oriented nonwoven fabric, as long as the mode value of the diameter distribution of the first filaments, which are arranged and oriented in the one direction, is in the range of 1 to 4 $\mu$m, the mode value of the diameter distribution of the second filaments, which are arranged and oriented in the direction orthogonal to the one direction, does not have to be in the range of 1 to 4 $\mu$m. For example, in the orthogonally oriented nonwoven fabric, the mode value of the diameter distribution of the first filaments, which are arranged and oriented in the one direction, may be in the range of 1 to 4 $\mu$m, and the mode value of the diameter distribution of the second filaments, which are arranged and oriented in the direction orthogonal to the one direction, may be in the range of 4 to 11 $\mu$m.

As described above, the nonwoven fabric for sound absorbing application according to the present invention is adapted to be laminated on the porous sound absorbing material. As shown in FIG. 2, a most fundamental lamination form of the nonwoven fabric for sound absorbing application according to the present invention and the porous sound absorbing material is a "nonwoven fabric for sound absorbing application - porous sound absorbing material" form, which is formed of the porous sound absorbing material and the nonwoven fabric for sound absorbing application according to the present invention disposed thereon. More specifically, the nonwoven fabric for sound absorbing application according to the present invention is typically disposed on the front and/or back surface of a sheet or block form of the porous sound absorbing material. However, the present invention is not limited thereto, and there may be various lamination forms of the nonwoven fabric for sound absorbing application according to the present invention and the porous sound absorbing material. For example, (at least one additional layer made of) at least one of the nonwoven fabric for sound absorbing application, the porous sound absorbing material, various nonwoven fabrics, any other sheet-shaped sound absorbing materials and various cover materials may be added to the fundamental lamination form shown in FIG. 2, as necessary. Such addition may be made to at least one of the following locations: between the nonwoven fabric for sound absorbing application and the porous sound absorbing material; on top of the nonwoven fabric for sound absorbing application; and on bottom of the porous sound absorbing material.

Next, an embodiment of the nonwoven fabric for sound absorbing application according to the present invention will be described. As described above, the nonwoven fabric for sound absorbing application according to the present invention may be either the unidirectionally oriented nonwoven fabric or the orthogonally oriented nonwoven fabric. In the following description, the term "longitudinal (direction)" may refer to the machine direction (MD direction), i.e., the feed direction of the nonwoven fabric for sound absorbing application during manufacture (corresponding to the length direction of the nonwoven fabric for sound absorbing application). The term "transverse (direction)" may refer to a direction (TD direction) orthogonal to the longitudinal direction, i.e., a direction orthogonal to the feed direction (corresponding to the width direction of the nonwoven fabric for sound absorbing application).

First Embodiment: Longitudinally Oriented Filament Nonwoven Fabric (Unidirectionally Oriented Nonwoven Fabric)

A first embodiment of the nonwoven fabric for sound absorbing application according to the present invention is longitudinally oriented filament nonwoven fabric obtained by orienting a plurality of filaments made of a thermoplastic resin in the longitudinal direction, that is, so that the length direction (axial direction) of each filament substantially coincides with the longitudinal direction, and drawing these oriented filaments in the longitudinal direction (axial direction). In such a longitudinally oriented filament nonwoven fabric, molecules in each filament are oriented in the longitudinal direction. Here, the longitudinal drawing ratio of each of the filaments is in the range of 3 to 6. The mode value of the diameter distribution of the filaments (i.e., the drawn filaments) constituting the longitudinally oriented filament nonwoven fabric is in the range of 1 to 4 $\mu$m, preferably in the range of 2 to 3 $\mu$m. Furthermore, the average diameter of the filaments constituting the longitudinally oriented filament nonwoven fabric is in the range of 1 to 4 $\mu$m, preferably in the range of

2 to 3 $\mu$m. The variation coefficient of the diameter distribution of the filaments constituting the longitudinally oriented filament nonwoven fabric is in the range of 0.1 to 0.3, preferably in the range of 0.15 to 0.25. Here, the variation coefficient is obtained by dividing the standard deviation of the diameters of the filaments constituting the longitudinally oriented filament nonwoven fabric by the average (average filament diameter) of the diameters.

As long as they are substantially long, the filaments are not particularly limited. For example, the filaments may have an average length greater than 100 mm. Furthermore, the filaments have merely to have an average diameter in the range of 1 to 4 $\mu$m. The longitudinally oriented filament nonwoven fabric may additionally contain filaments having a diameter less than 1 $\mu$m and/or filaments having a diameter greater than 4 $\mu$m. The length and diameter of the filaments can be measured using, for example, an enlarged photograph of the longitudinally oriented filament nonwoven fabric photographed by a scanning electron microscope. Specifically, the average and standard deviation of the filament diameters can be calculated from N (50, for example) measurements of the filament diameters, and then the variation coefficient of the filament diameter distribution can be obtained by dividing the standard deviation by the average filament diameter.

The grammage (weight per unit area) w of the longitudinally oriented filament nonwoven fabric may be in the range of 5 to 60 g/m$^2$, preferably in the range of 5 to 40 g/m$^2$, more preferably in the range of 10 to 30 g/m$^2$. The grammage is calculated based, for example, on the average of measured weights of 300 mm $\times$ 300 mm sheets of the nonwoven fabric. The longitudinally oriented filament nonwoven fabric has a thickness t of 10 to 110 $\mu$m, preferably 20 to 70 $\mu$m. The specific volume t/w (cm$^3$/g) of the longitudinally oriented filament nonwoven fabric obtained by dividing the thickness t by the grammage w is in the range of 2.0 to 3.5. Such a specific volume t/w in the range of 2.0 to 3.5 indicates that the thickness of the longitudinally oriented filament nonwoven fabric is small relative to the grammage. Furthermore, the air permeability of the longitudinally oriented filament nonwoven fabric is in the range of 5 to 250 cm$^3$/cm$^2$·s, preferably in the range of 10 to 70 cm$^3$/cm$^2$·s.

Furthermore, the folding width of the filaments in producing the longitudinally oriented filament nonwoven fabric is preferably 300 mm or more. Allowing the filaments to function as long continuous fibers in turn requires a relatively large folding width. As will be described later, after being spun, the filaments are vibrated in the longitudinal direction and arranged folded back on the conveyor. The folding width of the filaments refers to the average of the substantially straight distances between the bends of such a folded filament, and can be visually observed in the longitudinally oriented filament nonwoven fabric made by drawing these filaments. In the manufacturing method (manufacturing apparatus) described later, such a folding width can be changed depending on, for example, the speed of the high-speed airstream and/or the rotation speed of the airstream vibration mechanism.

The filaments are obtained by melt-spinning a thermoplastic resin. As long as it is melt-spinnable, the thermoplastic resin is not particularly limited. Typically, a polyester, in particular, a polyethylene terephthalate having an intrinsic viscosity (IV) of 0.43 to 0.63, preferably 0.48 to 0.58, is used as the thermoplastic resin. Alternatively, polypropylene may be used as the thermoplastic resin. These materials are suitable for their good spinnability using meltblowing process or the like. The thermoplastic resin may contain additives such as an antioxidant, a weathering agent, and a coloring agent in an amount of about 0.01 to 2% by weight. Additionally or alternatively, a flame-retardant resin such as a flame-retardant polyester, which is provided with flame retardancy by copolymerization with flame-retardant phosphorus components, may be used as the thermoplastic resin, for example.

Next, an example of a method of manufacturing the longitudinally oriented filament nonwoven fabric will described. The method of manufacturing the longitudinally oriented filament nonwoven fabric includes the steps of: producing a nonwoven web including a plurality of filaments arranged and oriented in the longitudinal direction, and obtaining a longitudinally oriented filament nonwoven fabric by uniaxially drawing the produced nonwoven web (that is, the plurality of filaments arranged and oriented in the longitudinal direction).

Specifically, the step of producing the nonwoven web includes: preparing a set of nozzles configured to extrude a plurality (large number) of filaments, a conveyor belt configured to collect and convey the filaments extruded from the set of nozzles, and an airstream vibrating means configured to vibrate a high-speed airstream directed to the filaments; extruding the plurality (large number) of filaments from the set of nozzles onto the conveyor belt; allowing the filaments extruded from the set of nozzles to accompany the high-speed airstream so as to reduce the filament diameter; and causing the airstream vibrating means to periodically vary the direction of the high-speed airstream in the travel direction of the conveyor belt (that is, in the longitudinal direction). Through these steps, a nonwoven web including a plurality of filaments arranged and oriented in the travel direction of the conveyor belt (that is, in the longitudinal direction) is produced in the step of producing the nonwoven web. In the step of obtaining the longitudinally oriented filament nonwoven fabric, the nonwoven web produced in the step of producing the nonwoven web is uniaxially drawn in the longitudinal direction so as to obtain the longitudinally oriented filament nonwoven fabric. The drawing ratio is in the range of 3 to 6.

Here, regarding the set of nozzles, the number of nozzles, the number of nozzle holes, the nozzle hole pitch P, the nozzle hole diameter D, and the nozzle hole length L may be set as desired. Preferably, the nozzle hole diameter D may be in the range of 0.1 to 0.2 mm and the value L/D may be in the range of 10 to 40.

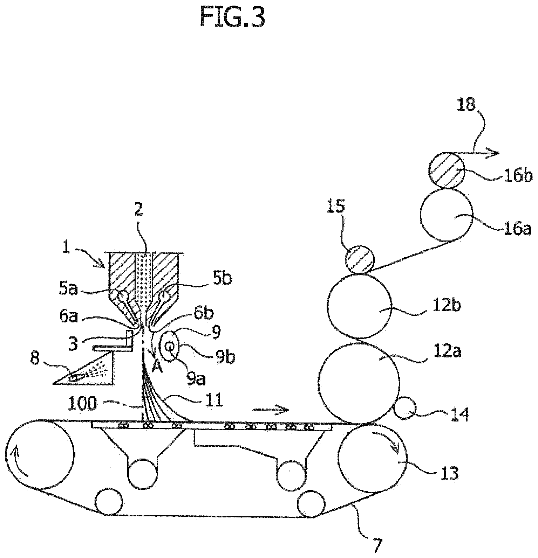

FIG. 3 shows a schematic configuration of an example of a manufacturing apparatus of the longitudinally oriented filament nonwoven fabric. The manufacturing apparatus shown in FIG. 3 is configured to manufacture the longitudinally oriented filament nonwoven fabric by meltblowing process, and includes a meltblowing die 1, a conveyor belt 7, an airstream vibration mechanism 9, drawing cylinders 12a, 12b, take-up nip rollers 16a, 16b, and the like.

First, at the upstream end of the manufacturing apparatus, a thermoplastic resin (a thermoplastic resin mainly containing a polyester or a polypropylene, in this example) is introduced into an extruder (not shown) and melted and extruded by the extruder. Then, the extruded thermoplastic resin is passed to the meltblowing die 1.

The meltblowing die 1 has a large number of nozzles 3 at its distal end (lower end). The nozzles 3 are lined up in a direction orthogonal to the plane of FIG. 3, that is, in a direction orthogonal to the travel direction of the conveyor belt 7. The molten resin 2 passed to the meltblowing die 1 by a gear pump (not shown) or the like is extruded from the nozzles 3, so that a large number of filaments 11 are formed (spun). Note that FIG. 3, which is a cross-sectional view of the meltblowing die 1, shows only one of the nozzles 3. The meltblowing die 1 includes air reservoirs 5a, 5b provided on the opposite sides of each nozzle 3. High-pressure air heated to a temperature equal to or higher than the melting point of the thermoplastic resin is fed into these air reservoirs 5a, 5b, and then jetted from slits 6a, 6b. The slits 6a, 6b communicate with the air reservoirs 5a, 5b and open to the distal end of the meltblowing die 1. As a result of air jetting, a high-speed airstream substantially parallel to the extrusion direction of the filaments 11 from the nozzles 3 is formed below the nozzles 3. This high-speed airstream maintains the filaments 11 extruded from the nozzles 3 in a draftable molten state. The high-speed airstream applies frictional forces to the filaments 11 to draft the filaments 11 and reduce the diameter of the filaments 11. The diameter of the filaments 11 immediately after being spun is preferably 10 $\mu$m or less. The high-speed airstream formed below the nozzles 3 has a temperature higher than the temperature for spinning the filaments 11 by 20 °C or more, preferably by 40 °C or more.

In the method of forming the filaments 11 with the meltblowing die 1, the temperature of the high-speed airstream can be increased such that the temperature of the filaments 11 immediately after being extruded from the nozzles 3 is sufficiently higher than the melting point of the filaments 11, and this allows reduction of the diameter of the filaments 11.

The conveyor belt 7 is disposed below the meltblowing die 1. The conveyor belt 7 is wound around conveyor rollers 13 and other rollers configured to be rotated by a driver (not shown). By rotating the conveyor rollers 13 to drive the conveyor belt 7 to move, the filaments 11 extruded from the nozzles 3 and collected on the conveyor belt 7 are conveyed in the arrow direction (right direction) of FIG. 3.

The airstream vibration mechanism 9 is provided at a predetermined location between the meltblowing die 1 and the conveyor belt 7, specifically, at a location near a space through which a high-speed airstream flows. Here, the high-speed airstream is a combination of the high-pressure heated air flows that are jetted from the opposite slits 6a, 6b of the nozzles 3. The airstream vibration mechanism 9 has an elliptical cylindrical portion having an elliptical cross section, and support shafts 9a extending from the opposite ends of the elliptical cylindrical portion. The airstream vibration mechanism 9 is disposed substantially orthogonal to the direction in which the filaments 11 are conveyed by the conveyor belt 7 (the travel direction of the conveyor belt 7), that is, disposed substantially in parallel to the width direction of the longitudinally oriented long-fiber nonwoven fabric to be manufactured. The airstream vibration mechanism 9 is configured such that the elliptical cylindrical portion rotates in the direction of arrow A as the support shafts 9a are rotated. Disposing and rotating the elliptical cylindrical airstream vibration mechanism 9 near the high-speed airstream allows the direction of the high-speed airstream to be changed by the Coanda effect, as will be described later. It should be noted that the present invention is not limited to the manufacturing apparatus having a single airstream vibration mechanism 9, and the manufacturing apparatus may have a plurality of airstream vibration mechanisms 9 as necessary to increase the vibration amplitude of the filaments 11.

The filaments 11 flow along the high-speed airstream. The high-speed airstream, which is a combination of the high-pressure heated air flows that are jetted from the slits 6a, 6b, flows in a direction substantially orthogonal to the conveying surface of the conveyor belt 7. In this connection, it is generally known that when there is a wall near the high-speed jet flow of gas or liquid, the jet flow tends to pass near surfaces of the wall. Such a phenomenon is called the Coanda effect. The airstream vibration mechanism 9 uses this Coanda effect to change the direction of the high-speed airstream and thus, the flow of the filaments 11.

It is desirable that the width of the airstream vibration mechanism 9 (the elliptical cylindrical portion), that is, the length of the airstream vibration mechanism 9 in the direction parallel to the support shafts 9a, be greater than the width of the filament set to be spun by the meltblowing die 1 by 100 mm or more. If the width of the airstream vibration mechanism 9 were smaller than the above, the airstream vibration mechanism 9 would fail to sufficiently change the flow direction of the high-speed airstream at the opposite ends of the filament set, and thus, the filaments 11 would not be oriented satisfactorily in the longitudinal direction at the opposite ends of the filament set. The minimum distance between a circumferential wall surface 9b of the airstream vibration mechanism 9 (the elliptical cylindrical portion) and the axis 100 of the high-speed airstream is 25 mm or less, preferably 15 mm or less. If the minimum distance between the airstream vibration mechanism 9 and the airstream axis 100 were greater than the above, the effect of attracting the high-speed airstream to the airstream vibration mechanism 9 would be reduced and the airstream vibration mechanism 9 would fail to vibrate the filaments 11 satisfactorily.

Here, the vibration amplitude of the filaments 11 depends on the speed of the high-speed airstream and the rotation speed of the airstream vibration mechanism 9. Accordingly, the speed of the high-speed airstream is set to 10 m/sec or more, preferably 15 m/sec or more. If the speed of the high-speed airstream were lower than the above, the high-speed airstream would not be attracted satisfactorily to the circumferential wall surface 9b of the airstream vibration mechanism 9, and the airstream vibration mechanism 9 would fail to vibrate the filaments 11 satisfactorily. The rotation speed of the airstream vibration mechanism 9 may be set to a value ensuring that the vibration frequency that maximizes the vibration amplitude of the filaments 11 is achieved at the circumferential wall surface 9b. Such a maximizing vibration frequency, which varies depending on the spinning conditions, is determined appropriately according to the spinning conditions.

In the manufacturing apparatus shown in FIG. 3, spray nozzles 8 are provided between the meltblowing die 1 and the conveyor belt 7. The spray nozzles 8 are configured to spray water mist or the like into the high-speed airstream. The filaments 11 are cooled and rapidly solidified by the water mist or the like sprayed by the spray nozzles 8. Note that, to avoid unnecessary complications, FIG. 3 shows only one of the spray nozzles 8, although there are actually multiple nozzles.

The solidified filaments 11 are vibrated in the longitudinal direction in the course of being stacked onto the conveyor belt 7, and successively collected on the conveyor belt 7 with end portions folded back in the longitudinal direction. The filaments 11 on the conveyor belt 7 are conveyed in the arrow direction (right direction) of FIG. 3 by the conveyor belt 7, then they are nipped by a presser roller 14 and drawing cylinder 12a heated to the drawing temperature, and then they are transferred onto the drawing cylinder 12a. Thereafter, the filaments 11 are nipped by the drawing cylinder 12b and a presser rubber roller 15, and transferred onto the drawing cylinder 12b. As a result, the filaments 11 are held tight between these two drawing cylinders 12a, 12b. Conveying the filaments 11 held tight between the drawing cylinders 12a, 12b produces a nonwoven web in which adjacent ones of the filaments 11 that are partially folded back in the longitudinal direction are fused to each other.

After that, the nonwoven fabric is taken up by the take-up nip rollers 16a, 16b (the downstream take-up nip roller 16b is made of rubber). The circumferential speed of the take-up nip rollers 16a, 16b is set greater than the circumferential speed of the drawing cylinders 12a, 12b. As a result, the nonwoven web is longitudinally drawn to be 3 to 6 times longer than the original length. In this way, a longitudinally oriented filament nonwoven fabric 18 is manufactured. If necessary, the nonwoven web may further be subjected to a post-processing including heating or partial bonding such as heat embossing or the like. Here, the drawing ratio can be defined, for example, using marks applied at regular intervals on the nonwoven web before drawing the filaments by the following equation:

$$\text{Drawing ratio} = \text{``distance between the marks after drawing''} / \text{``distance between the marks before drawing''}.$$

As described above, the average diameter of the filaments constituting the longitudinally oriented filament nonwoven fabric 18 thus manufactured is in the range of 1 to 4 $\mu$m (preferably 2 to 3$\mu$m). The variation coefficient of the diameter distribution of the filaments constituting the longitudinally oriented filament nonwoven fabric 18 thus manufactured is in the range of 0.1 to 0.3. The longitudinally oriented filament nonwoven fabric 18 may be slightly elastic in the direction parallel to the filaments, that is, in the longitudinal direction which coincides with the axial direction and the drawing direction of the filaments. The tensile strength in the longitudinal direction of the longitudinally oriented filament nonwoven fabric is 20 N/50mm or more. The tensile strength is measured by JIS L1096 8. 14. 1 A-method.

Second Embodiment: Transversely Oriented Filament Nonwoven Fabric (Unidirectionally Oriented Nonwoven Fabric)

A second embodiment of the nonwoven fabric for sound absorbing application according to the present invention is a transversely oriented filament nonwoven fabric obtained by arranging and orienting a plurality of filaments made of a thermoplastic resin in the transverse direction, that is, so that the length direction (axial direction) of each filament substantially coincides with the transverse direction, and drawing these arranged and oriented filaments in the transverse direction (axial direction). In such a transversely oriented filament nonwoven fabric, molecules in each filament are oriented in the transverse direction. Here, as in the longitudinally oriented filament nonwoven fabric, the transverse drawing ratio of each of the filaments is in the range of 3 to 6. The mode value of the diameter distribution of the filaments (i.e., the drawn filaments) constituting the transversely oriented filament nonwoven fabric is in the range of 1 to 4 $\mu$m, preferably in the range of 2 to 3 $\mu$m. Furthermore, the average diameter of the filaments constituting the transversely oriented filament nonwoven fabric is in the range of 1 to 4 $\mu$m, preferably in the range of 2 to 3 $\mu$m. The variation coefficient of the diameter distribution of the filaments constituting the transversely oriented filament nonwoven fabric is in the range of 0.1 to 0.3, preferably in the range of 0.15 to 0.25.

The grammage w of the transversely oriented filament nonwoven fabric may be in the range of 5 to 60 g/m$^2$, preferably in the range of 5 to 40 g/m$^2$, more preferably in the range of 10 to 30 g/m$^2$. The transversely oriented filament nonwoven fabric has a thickness t of 10 to 110 $\mu$m, preferably 20 to 70 $\mu$m. The specific volume t/w (cm$^3$/g) of the transversely oriented filament nonwoven fabric obtained by dividing the thickness t by the grammage w is in the range of 2.0 to 3.5. Furthermore, the air permeability of the transversely oriented filament nonwoven fabric is in the range of 5 to 250 cm$^3$/cm$^2$·s, preferably in the range of 10 to 70 cm$^3$/cm$^2$·s.

Note that description for components that may be similar with those in the longitudinally oriented filament nonwoven fabric will be omitted as appropriate below.

Next, an example of a method of manufacturing the transversely oriented filament nonwoven fabric will described. The method of manufacturing the transversely oriented filament nonwoven fabric includes the steps of: producing a nonwoven web including a plurality of filaments arranged and oriented in the transverse direction, and obtaining a transversely oriented filament nonwoven fabric by uniaxially drawing the produced nonwoven web (that is, the plurality of filaments arranged and oriented in the transverse direction).

Specifically, the step of producing the nonwoven web includes: preparing a set of nozzles configured to extrude a plurality (large number) of filaments, a conveyor belt configured to collect and convey the filaments extruded from the set of nozzles, and an airstream vibrating means configured to vibrate a high-speed airstream directed to the filaments; extruding the plurality (large number) of filaments from the set of nozzles onto the conveyor belt; allowing the filaments extruded from the set of nozzles to accompany the high-speed airstream so as to reduce the filament diameter; and causing the airstream vibrating means to periodically vary the direction of the high-speed airstream in a direction orthogonal to the travel direction of the conveyor belt (that is, in the transverse direction). Through these steps, a nonwoven web including a plurality of filaments arranged and oriented in the direction orthogonal to the travel direction of the conveyor belt (that is, in the transverse direction) is produced in the step of producing the nonwoven web. In the step of obtaining the transversely oriented filament nonwoven fabric, the nonwoven web produced in the step of producing the nonwoven web is uniaxially drawn in the transverse direction so as to obtain the transversely oriented filament nonwoven fabric. The drawing ratio is in the range of 3 to 6.

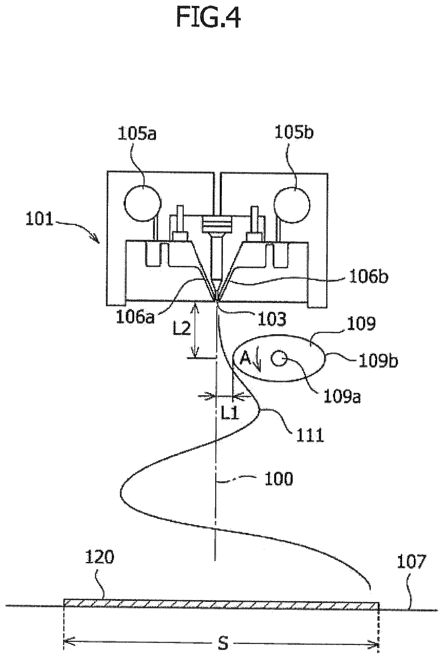

FIG. 4 shows a schematic configuration of an example (referred to as "first manufacturing apparatus" below) of a manufacturing apparatus of the transversely oriented filament nonwoven fabric. The first manufacturing apparatus of the transversely oriented filament nonwoven fabric is configured to manufacture the transversely oriented filament nonwoven fabric by meltblowing process. As shown in FIG. 4, the first manufacturing apparatus includes a meltblowing die 101, a conveyor belt 107, an airstream vibration mechanism 109, a drawing device (not shown), and the like. In FIG. 4, the meltblowing die 101 is shown in a cross-sectional view so that the internal structure can be seen.

First, at the upstream end of the manufacturing apparatus, a thermoplastic resin (a thermoplastic resin mainly containing a polyester or a polypropylene, in this example) is introduced into an extruder (not shown) and is melted and extruded by the extruder. Then, the extruded thermoplastic resin is passed to the meltblowing die 101.

The meltblowing die 101 has a large number of nozzles 103 at its distal end (lower end). The nozzles 103 are lined up in a direction orthogonal to the plane of FIG. 4, that is, in the travel direction of the conveyor belt 107. The molten resin passed to the meltblowing die 101 by a gear pump (not shown) or the like is extruded from the nozzles 103, so that a large number of filaments 111 are formed (spun). Air reservoirs 105a, 105b are provided on the opposite sides of each nozzle 103. High-pressure air heated to a temperature equal to or higher than the melting point of the thermoplastic resin is fed into these air reservoirs 105a, 105b, and then jetted from slits 106a, 106b. The slits 106a, 106b communicate with the air reservoirs 105a, 105b and open to the distal end of the meltblowing die 101. As a result of air jetting, a high-speed airstream substantially parallel to the extrusion direction of the filaments 111 from the nozzles 103 is formed below the nozzles 103. This high-speed airstream maintains the filaments 111 extruded from the nozzles 103 in a draftable molten state. The high-speed airstream applies frictional forces to the filaments 111 to draft the filaments 111 and reduce the diameter of the filaments 111. The high-speed airstream has a temperature higher than the temperature for spinning the filaments 111 by 20 °C or more, preferably by 40 °C or more.

As is the case with the longitudinally oriented filament nonwoven fabric, the temperature of the high-speed airstream can be increased such that the temperature of the filaments 111 immediately after being extruded from the nozzles 103 is sufficiently higher than the melting point of the filaments 111, and this allows reduction of the diameter of the filaments 111.

The conveyor belt 107 is disposed below the meltblowing die 101. The conveyor belt 107 is wound around conveyor rollers and other rollers (neither is shown) configured to be rotated by a driver (not shown). By rotating the conveyor rollers to drive the conveyor belt 107 to move, the filaments 111 extruded from the nozzles 103, more specifically, a nonwoven web 120 formed of the filaments 111 accumulated on the conveyor belt 107, are conveyed in the near-to-far or far-to-near direction of FIG. 4 orthogonal to the plane of FIG. 4.

The airstream vibration mechanism 109 is provided at a predetermined location between the meltblowing die 101 and the conveyor belt 107, specifically, in (the vicinity of) a space through which a high-speed airstream flows. Here, the high-speed airstream is a combination of the high-pressure heated air flows that are jetted from the slits 106a, 106b.

The airstream vibration mechanism 109 has an elliptical cylindrical portion having an elliptical cross section, and support shafts 109a extending from the opposite ends of the elliptical cylindrical portion. The airstream vibration mechanism 109 is disposed in parallel to the direction in which the filaments 111 (web 120) are conveyed by the conveyor belt 107. The airstream vibration mechanism 109 is configured such that the elliptical cylindrical portion rotates in the direction of arrow A as the support shafts 109a are rotated.

As with the airstream vibration mechanism 9 shown in FIG. 3, the airstream vibration mechanism 109 is capable of using the Coanda effect to change the direction of the high-speed airstream (flow of the filaments 111). In other words, by rotating the airstream vibration mechanism 109, the filaments 111 can be periodically vibrated. Here, the support shafts 109a of the airstream vibration mechanism 109 are disposed in parallel to the direction in which the filaments 111 (web 120) are conveyed by the conveyor belt 107. Thus, the filaments 111 vibrate in the direction orthogonal to the conveying direction of the conveyor belt 107, that is, in the width direction of the transversely oriented long-fiber nonwoven fabric to be manufactured. Thereby, the nonwoven web 120 formed of the filaments 111 arranged and oriented in the width direction and having the width S is produced on the conveyor belt 107.

Assume here that L 1 is the distance between the airstream axis 100 and the circumferential wall surface 109b provided when the circumferential wall surface 109b of the airstream vibration mechanism 109 comes closest to the axis 100 of the high-speed airstream. Assume also that L2 is the distance between the axis of each supporting shaft 109a of the airstream vibration mechanism 109 and the lower end surface of the meltblowing die 101, which constitutes substantially the same plane as the distal ends of the nozzles 103. Basically, the smaller L1 and L2 are, the larger the width S of the nonwoven web 120 is produced on the conveyor belt 107. However, if L1 were excessively small, there would possibly be problems such as the filaments 111 winding around the airstream vibration mechanism 109. Also, the length L2 is naturally limited by the size of the cross section of the airstream vibration mechanism 109 and the like. On the other hand, if L1 and L2 were too large, the filaments 111 would be less effectively vibrated by the circumferential wall surface 109b of the airstream vibration mechanism 109. Considering the above, L1 is preferably 30 mm or less, more preferably 15 mm or less, and most preferably 10 mm or less. L2 is preferably 80 mm or less, more preferably 55 mm or less, and most preferably 52 mm or less. Note, however, that it is necessary to dispose the airstream vibration mechanism 109 at a location ensuring that the filaments 111 do not go into the airstream vibration mechanism 109.

Furthermore, the vibration amplitude of the filaments 111 (width S of the nonwoven web 120) also depends on the speed of the high-speed airstream and the rotation speed of the airstream vibration mechanism 109. Assume here that vibrations of the circumferential wall surface 109b are represented by variations of the distance of the circumferential wall surface 109b and the airstream axis 100 caused by the rotation of the airstream vibration mechanism 109. Then, the circumferential wall surface 109b has a vibration frequency that maximizes the vibration amplitude of the filaments 111. If the peripheral wall surface 109b vibrated at a vibration frequency different from this maximizing vibration frequency, the vibration frequency of the circumferential wall surface 109b would not match the inherent vibration frequency of the high-speed airstream, and the vibration amplitude of the filaments 111 would be relatively small. Such a maximizing vibration frequency varies depending on the spinning conditions. For vibrating the filaments 111 spun by ordinary spinning means, the peripheral wall surface 109b preferably vibrated at a vibration frequency in the range of 5 Hz to 30 Hz (inclusive), more preferably in the range of 10 Hz to 20 Hz (inclusive), most preferably in the range of 12 Hz to 18 Hz (inclusive). The speed of the high-speed airstream is 10 m/sec or more, preferably 15 m/sec or more. If the speed of the high-speed airstream were less than the above, the airstream vibration mechanism 109 would fail to vibrate the filaments 111 satisfactorily.

It is desirable that the length of the airstream vibration mechanism 109 be greater than the width of the filament set to be spun by the meltblowing die 101 by 100 mm or more. If the length of the airstream vibration mechanism 109 were smaller than the above, the airstream vibration mechanism 109 would fail to sufficiently change the flow direction of the high-speed airstream at the opposite ends of the filament set, and thus, the filaments 111 would not be oriented satisfactorily in the transverse direction at the opposite ends of the filament set.

The nonwoven web 120 on the conveyor belt 107 is conveyed by the conveyor belt 107 in the near-to-far or far-to-near direction of FIG. 4 orthogonal to the plane of FIG. 4, and then transversely drawn by the drawing device (not shown) up to 3 to 6 times longer than the original length. In this way, the transversely oriented filament nonwoven fabric is manufactured. Non-limiting examples of the drawing device may include a pulley-based drawing device and a tenter-type drawing device. If necessary, the nonwoven web 120 may further be subjected to a post-processing including heating or partial bonding such as heat embossing or the like. Also, similarly to the manufacturing apparatus (FIG. 3) of the longitudinally oriented filament nonwoven fabric, the first manufacturing apparatus (FIG. 4) of the transversely oriented filament nonwoven fabric may further include a device configured to spray water mist or the like for rapidly cooling the filaments, such as spray nozzles or the like.

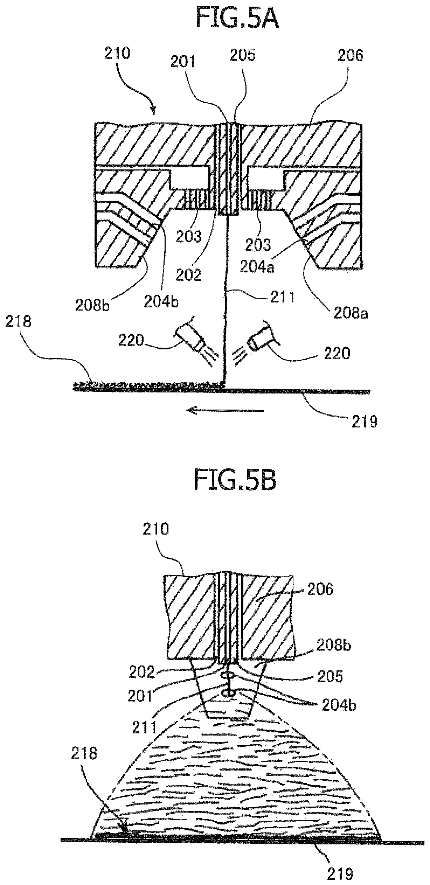

FIGS. 5A and 5B show a configuration of a main part of another example (referred to as "second manufacturing apparatus" below) of the manufacturing apparatus of the transversely oriented filament nonwoven fabric. FIG. 5A is a front view of the second manufacturing apparatus of the transversely oriented filament nonwoven fabric. FIG. 5B is a side view of the second manufacturing apparatus of the transversely oriented filament nonwoven fabric. As shown in FIGS. 5A and 5B, the second manufacturing apparatus of the transversely oriented filament nonwoven fabric includes a spinning head 210, a conveyor belt 219, a drawing device (not shown), and the like. In FIGS. 5A and 5B, the spinning head 210 is shown in a cross-sectional view so that the internal structure can be seen. In this manufacturing apparatus, the conveyor belt 219 is disposed below the spinning head 210 and is configured to travel in the arrow direction (left direction) of FIG. 5A.

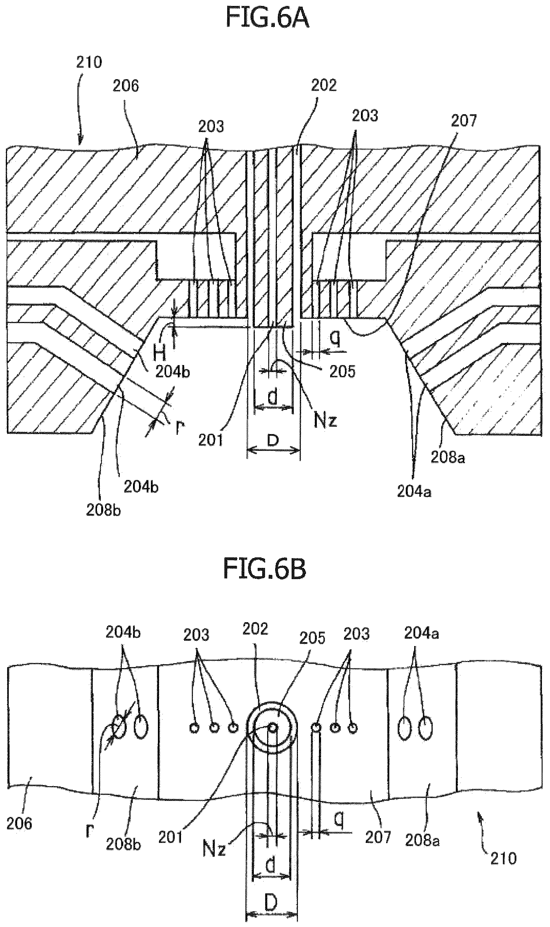

FIGS. 6A and 6B show the spinning head 210. FIG. 6A is a cross-sectional view of the spinning head 210. FIG. 6B is a bottom view of the spinning head 210.

The spinning head 210 includes an air jet portion 206, and a cylindrical spinning nozzle portion 205 disposed in the interior of the air injection portion 206. A spinning nozzle 201 extending in the direction of gravity and opening to the lower end surface of the spinning nozzle portion 205 is formed through the spinning nozzle portion 205. The nozzle hole diameter Nz of the spinning nozzle 201 may be set as desired, and may be, for example, in the range of 0.1 to 0.7 mm. The spinning head 210 is disposed above the conveyor belt 219 so that the spinning nozzle 201 is positioned substantially at the center in the width direction of the conveyor belt 219. The molten resin is supplied to the spinning nozzle 201 from above by a gear pump (not shown) or the like, and the supplied molten resin passes through the spinning nozzle 201 and extruded downward from the lower open end of the spinning nozzle 201, so that filaments 211 are formed (spun).

The lower surface of the air jet portion 206 has a recess defined by two inclined surfaces 208a, 208b. The bottom surface of the recess constitutes a horizontal surface 207 orthogonal to the direction of gravity. One of the inclined surfaces 208a is located at one end of the horizontal surface 207 in the travel direction of the conveyor belt 219. The other inclined surface 208b is located at the other end of the horizontal surface 207 in the travel direction of the conveyor belt 219. The two inclined surfaces 208a, 208b are disposed symmetrically with respect to the plane orthogonal to the horizontal surface 207 and passing through the centerline of the spinning nozzle 201 so as to be inclined so that the distance between the inclined surfaces 208a, 208b gradually increases downward.

The lower end surface of the spinning nozzle portion 205 is disposed so as to protrude from the horizontal surface 207 in a center portion of the horizontal surface 207 of the air jet portion 206. The protrusion amount H of the lower end surface of the spinning nozzle portion 205 from the horizontal surface 207 may be set as desired, and may be, for example, in the range of 0.01 to 1 mm. An annular primary air slit 202 configured to jet high-temperature primary air is formed between the outer circumferential surface of the spinning nozzle portion 205 and the air jet portion 206. The outer diameter of the spinning nozzle portion 205, that is, the inner diameter d of the primary air slit 202 may be set as desired, and may be, for example, 2.5 to 6 mm. Although not shown, slit-shaped flow paths are formed in the interior of the spinning head 210 in order mainly to homogenize the speed and temperature of the primary air jetted from the primary air slit 202. At least some of the intervals between the slit-shaped flow paths are in the range of 0.1 to 0.5 mm. Through the slit-shaped flow paths, the high-temperature primary air is supplied to the primary air slit 202.

When the high-temperature primary air is supplied to the primary air slit 202 from above, the high-temperature primary air passes through the primary air slit 202, and is jetted downward at a high speed from the open end, close to the horizontal surface 207, of the primary air slit 202. As the primary air is jetted from the primary air slit 202 at a high speed, a reduced pressure is generated below the lower end surface of the spinning nozzle portion 205, and this reduced pressure vibrates the filaments 211 extruded from the spinning nozzle 201.

Furthermore, secondary air jet ports 204a, 204b configured to jet high-temperature secondary air are also formed in the air jet portion 206. The purpose of jetting the secondary air is to spread the filaments 211 vibrated by the primary air jetted from the primary air slit 202 and to orient the filaments 211 in one direction. Each of the secondary air jet ports 204a has an opening in the inclined surface 208a and extends inward in the air jet portion 206 in a direction orthogonal to the inclined surface 208a. Similarly, each of the secondary air jet ports 204b has an opening in the inclined surface 208b and extends inward in the air jet portion 206 in a direction orthogonal to the inclined surface 208b. The secondary air jet ports 204a, 204b are disposed symmetrically with respect to the plane orthogonal to the horizontal surface 207 and passing through the centerline of the spinning nozzle 201. The diameter r of the secondary air jet ports 204a, 204b may be set as desired, and may preferably be in the range of 1.5 to 5 mm. In this embodiment, the two secondary air jet ports 204a and two secondary air jet ports 204b are formed. However, the number of secondary air jet ports 204a, 204b is not limited thereto and may be set as desired.

The secondary air jet ports 204a, 204b are configured to jet the secondary air slightly downward from the horizontal direction. The secondary air jetted from the secondary air jet ports 204a and the secondary air jetted from the secondary air jet ports 204b collide with each other below the spinning nozzle 201 and spread in the width direction of the conveyor belt 219. As a result, the falling, vibrating filaments 211 spread in the width direction of the conveyor belt 219.

Furthermore, a plurality of small holes 203 are formed on the opposite sides across the spinning nozzle portion 205. Each small hole 203 has an opening in the horizontal surface 207 and extends in parallel to the spinning nozzle 201. The small holes 203 are lined up in a straight line orthogonal to the centerline of the spinning nozzle 201. The same number (three, in this example) of small holes 203 are formed on each of the opposite sides across the spinning nozzle portion 205, one of which is closer to the secondary air jet ports 204a and the other of which is closer to the secondary air jet ports 204b. The small holes 203 are configured to jet high-temperature air downward from the open ends in the horizontal surface 207, thereby contributing to stable spinning of the filaments 211. The diameter q of each small hole 203 may be set as desired, and may preferably be about 1 mm. The high-temperature air jetted from the small holes 203 may be introduced either from the source of the primary air to be jetted from the primary air slit 202, or from the source of the secondary air to be jetted from the secondary air jet ports 204a, 204b. Alternatively, high-temperature air other than the primary air and the secondary air may be supplied to the small holes 203.

Furthermore, a pair of cooling nozzles 220 is provided between the spinning head 210 and the conveyor belt 219. In this embodiment, one of the cooling nozzles 220 is disposed upstream of the filaments 211 spun from the spinning nozzle 201 in the travel direction of the conveyor belt 219. The other of the cooling nozzles 220 is disposed downstream of the filaments 211 spun from the spinning nozzle 201 in the travel direction of the conveyor belt 219. The cooling nozzles 220 spray water mist or the like onto the filaments 211 before the filaments 211 reach the conveyor belt 219, and thereby cool and solidify the filaments 211. The number and locations of the cooling nozzles 220 may be set as desired.

The solidified filaments 211 are collected on the conveyor belt 219 so as to be oriented in the width direction of the conveyor belt 219. Thereby, the nonwoven web 218 formed of the filaments 211 oriented in the width direction is produced on the conveyor belt 219.

The nonwoven web 218 produced on the conveyor belt 219 is conveyed by the conveyor belt 219 in the arrow direction of FIG. 5A, and then transversely drawn by the drawing device (not shown) up to 3 to 6 times longer than the original length. In this way, the transversely oriented filament nonwoven fabric is manufactured.

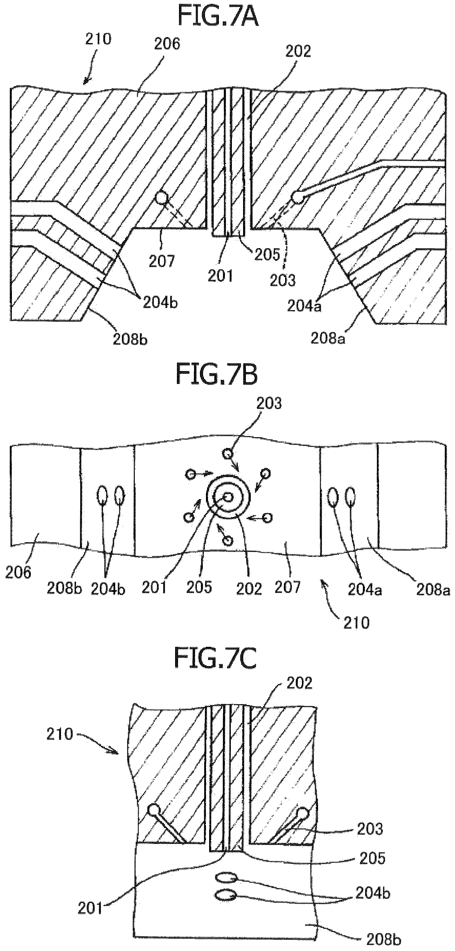

FIGS. 7A to 7C show a modified example of the spinning head 210. FIG. 7A is a cross-sectional view of the spinning head 210 according to the modified example. FIG. 7B is a bottom view of the spinning head 210 according to the modified example. FIG. 7C is a cross-sectional view of the spinning head 210 according to the modified example, taken in the direction orthogonal to that of FIG. 7A.

As shown in FIGS. 7A to 7C, in the spinning head 210 according to the modified example, the small holes 203 are arranged in a circular pattern surrounding the spinning nozzle portion 205 (spinning nozzle 201). The small holes 203 are formed to be slightly inclined with respect to the horizontal plane, and high-temperature air is jetted from the small holes 203 in the arrow directions of FIG. 7B. High-temperature air jetted from such small holes 203 also contributes to stable spinning of the filaments 211.

As described above, the average diameter of the filaments constituting the transversely oriented filament nonwoven fabric thus manufactured is in the range of 1 to 4 $\mu$m (preferably 2 to 3$\mu$m). The variation coefficient of the diameter distribution of the filaments constituting the transversely oriented filament nonwoven fabric thus manufactured is in the range of 0.1 to 0.3. The transversely oriented filament nonwoven fabric may be slightly elastic in the direction parallel to the filaments, that is, in the transverse direction which coincides with the axial direction and the drawing direction of the filaments. The tensile strength in the transverse direction of the transversely oriented filament nonwoven fabric thus manufactured is 5 N/50mm or more, preferably 10 N/50mm or more, more preferably 20 N/50mm or more.

Third Embodiment: Orthogonally Oriented Nonwoven Fabric

A third embodiment of the nonwoven fabric for sound absorbing application according to the present invention is an orthogonally oriented nonwoven fabric including a plurality of first drawn filaments arranged and oriented in one direction, and a plurality of second drawn filaments arranged and oriented in a direction orthogonal to the one direction. Such an orthogonally oriented nonwoven fabric is basically formed by: (1) stacking and fusing the longitudinally oriented filament woven fabric and the transversely oriented filament nonwoven fabric together; (2) stacking and fusing two sheets of the longitudinally oriented filament nonwoven fabric together in an arrangement in which one of the sheets is rotated by 90° with respect to the other; or (3) stacking and fusing two sheets of the transversely oriented filament nonwoven fabric together in an arrangement in which one of the sheets is rotated by 90° with respect to the other. However, the present invention is not limited to these. For example, such an orthogonally oriented nonwoven fabric may be formed by (4) stacking and fusing together the longitudinally oriented filament nonwoven fabric and a different transversely oriented filament nonwoven fabric. This different transversely oriented filament nonwoven fabric may have a basis weight substantially equal to that of the transversely oriented filament nonwoven fabric according to the second embodiment and may be formed of filaments having an average diameter greater than that of the transversely oriented filament nonwoven fabric according to the second embodiment. The fusing method used herein is not particularly limited, and fusion is generally through thermal compression using an embossing roller or the like.

EXAMPLES

Hereinafter, the nonwoven fabric for sound absorbing application according to the present invention will be described via examples. Note, however, that the present invention is not limited by the following examples.

Nonwoven Fabric for Sound Absorbing Application

Longitudinally oriented filament nonwoven fabric was produced using the manufacturing apparatus shown in FIG. 3. A meltblowing die having spinning nozzles with a nozzle diameter of 0.15 mm, a nozzle pitch of 0.5 mm, L/D ("nozzle hole length"/ "nozzle hole diameter") = 20, and a spinning width of 500 mm was used. The meltblowing die was disposed orthogonal to the travel direction of the conveyor belt. As a filament material (thermoplastic resin), a polyethylene terephthalate having an intrinsic viscosity (IV) of 0.53 and a melting point of 260°C (manufactured by CHUNG SHING TEXTILE CO., LTD.) was used. Filaments were extruded from the meltblowing die with a discharge rate of 40 g/min per nozzle and a die temperature of 295°C. The high-speed airstream with a temperature of 400°C and a flow rate of 0.4 $m^3$/min was generated for drafting the filaments extruded from the nozzles to reduce the filament diameter. The filaments were cooled by water mist or the like sprayed by the spray nozzles. The airstream vibration mechanism was disposed so that the minimum distance from a vertical extension of each nozzle of the meltblowing die was 20 mm. The airstream vibration mechanism was rotated at 900 rpm (which produced the vibration frequency of 15.0 Hz on the circumferential wall surface of the airstream vibration mechanism). As a result, the filaments oriented in the longitudinal direction were collected on the conveyor belt. The filaments collected on the conveyor belt were heated and longitudinally drawn to be 4.5 times longer than the original length by the drawing cylinders. In this way, a longitudinally oriented filament nonwoven fabric was produced. Specifically, by appropriately changing the travel speed of the conveyor belt, a longitudinally oriented filament nonwoven fabric having a grammage of 5 to 40 $g/m^2$ was produced. Although the longitudinally oriented filament nonwoven fabric having a grammage of 5 to 40 $g/m^2$ was produced in this example, it has been confirmed that by appropriately changing the travel speed of the conveyor belt, it is possible to produce a longitudinally oriented filament nonwoven fabric having a grammage up to 60 $g/m^2$.

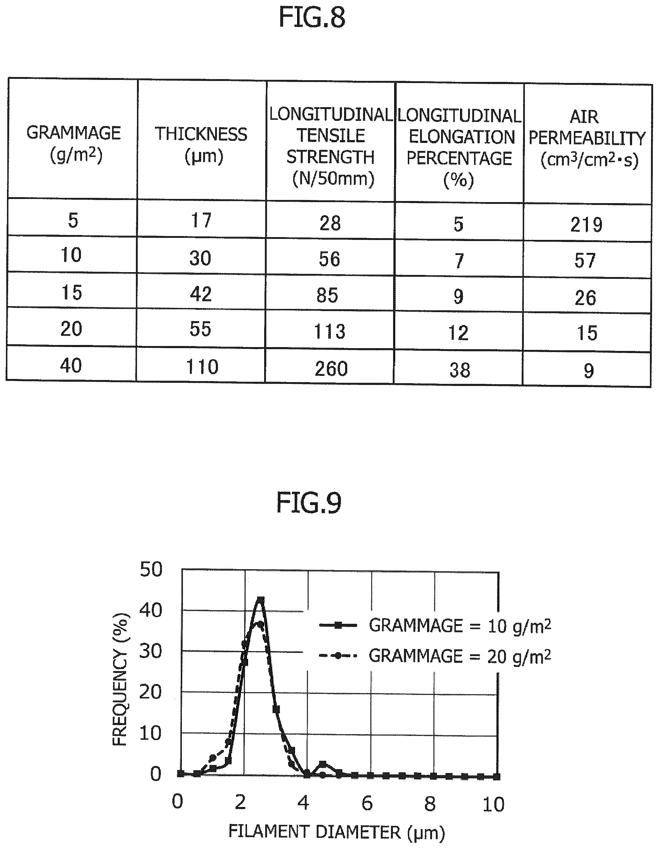

FIG. 8 shows the physical properties of the resulting longitudinally oriented filament nonwoven fabric. FIG. 9 shows the filament diameter distribution of a longitudinally oriented filament nonwoven fabric having a grammage of 10 $g/m^2$ and the filament diameter distribution of a longitudinally oriented filament nonwoven fabric having a grammage of 20 $g/m^2$. As shown in FIG. 9, in both types of longitudinally oriented filament nonwoven fabric, the mode value of the filament diameter distribution was about 2.5 $\mu$m and the average filament diameter was also about 2.5 $\mu$m. It is considered that, in the longitudinally oriented filament nonwoven fabric having any grammage within the range of 5 to 60 $g/m^2$, the mode value of the filament diameter distribution and average filament diameter would be substantially the same as those of FIG. 9 since such variations in grammage can be obtained simply by changing the travel speed of the conveyor belt during manufacture.

Porous Sound Absorbing Material

A commercially available PET sound absorbing sheet (PET felt) was used as a porous sound absorbing material. The thickness of the PET felt was 10 mm and the basis weight of the PET felt was 230 $g/m^2$.

Examples

Example 1 ("nonwoven fabric (5 g)" + "PET felt") was prepared by disposing a longitudinally oriented filament nonwoven fabric having a grammage of 5 $g/m^2$ on a surface of the PET felt. Example 2 ("nonwoven fabric (10 g)" + "PET felt") was prepared by disposing longitudinally oriented filament nonwoven fabric having a grammage of 10 $g/m^2$ on a surface of the PET felt. Example 3 ("nonwoven fabric (15 g)" + "PET felt") was prepared by disposing longitudinally oriented filament nonwoven fabric having a grammage of 15 $g/m^2$ on a surface of the PET felt. Example 4 ("nonwoven fabric (20 g)" + "PET felt") was prepared by disposing longitudinally oriented filament nonwoven fabric having a grammage of 20 $g/m^2$ on a surface of the PET felt. Example 5 ("nonwoven fabric (40 g)" + "PET felt") was prepared by disposing longitudinally oriented filament nonwoven fabric having a grammage of 40 $g/m^2$ on a surface of the PET felt.

Comparative Examples and Reference Example

Comparative Example 1 ("PET felt" alone) was prepared as the PET felt alone. Comparative Example 2 ("nonwoven fabric" alone) was prepared as the longitudinally oriented filament nonwoven fabric alone. Note that it was confirmed that the sound absorption performance of the longitudinally oriented filament nonwoven fabric alone did not depend substantially on variations in grammage within the range of 5 to 60 $g/m^2$. Reference Example 1 ("nonwoven fabric (20 g)" $\times$ 3 + "PET felt") was prepared by disposing three sheets of the longitudinally oriented filament nonwoven fabric having a grammage of 20 $g/m^2$ in a random fashion on a surface of the PET felt.

Sound Absorption Test

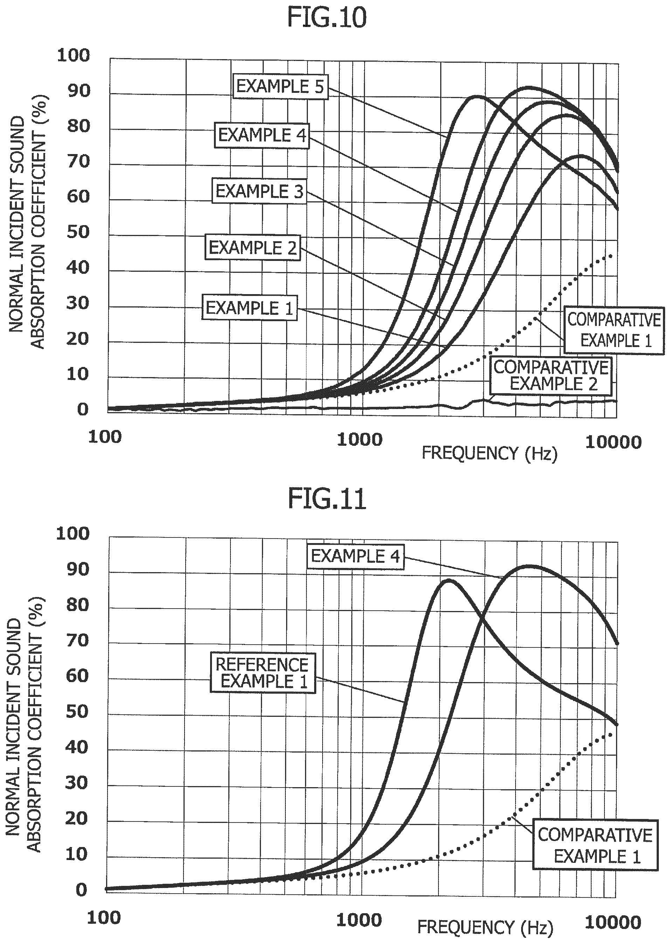

Using the normal incident sound absorption coefficient measurement system WinZacMTX manufactured by Nihon Onkyo Engineering Co., Ltd., the normal incident sound absorption coefficient was measured as specified in JIS A1405-2 for each of Examples 1 to 5, Comparative Examples 1 and 2, and Reference Example 1. FIG. 10 shows the measurements of the normal incident sound absorption coefficient for Examples 1 to 5 and Comparative Examples 1 and 2. FIG. 11 shows the measurements of the normal incident sound absorption coefficient for Example 4, Comparative Example 1, and Reference Example 1.

As shown in FIG. 10, it was confirmed that laminating the longitudinally oriented filament nonwoven fabric on the surface of the PET felt provided a sound absorption coefficient that was greater than the sum of the individual sound absorption coefficients of the PET felt and the longitudinally oriented filament nonwoven fabric, and especially provided a sound absorption coefficient significantly improved in the frequency band of 1000 to 10000 Hz as compared to the PET felt alone. It is considered that using the transversely oriented filament nonwoven fabric provides the same effects as the above.

Furthermore, as shown in FIG. 11, it was confirmed that disposing three sheets of the longitudinally oriented filament nonwoven fabric in a random fashion on a surface of the PET felt also provided an effect of improving a sound absorption coefficient in the frequency band of 1000 to 10000 Hz. This leads to the conclusion that, in place of the longitudinally oriented filament nonwoven fabric (or the transversely oriented filament nonwoven fabric), using the orthogonally oriented nonwoven fabric formed of a fused stack of these types of fabric will also provide an effect of improving a sound absorption coefficient in the frequency band of substantially 1000 to 10000 Hz.

As described above, a nonwoven fabric (filament nonwoven fabric) which includes a plurality of drawn filaments arranged and oriented in one direction, and in which the mode value of the diameter distribution of the filaments is 1 to 4 $\mu$m is suitable as a component of a sound absorbing material. In particular, when laminated on a porous sound absorbing material, such nonwoven fabric constitutes a sound absorbing material with the porous sound absorbing material, and the resultant laminated sound absorbing material has significantly improved sound absorption performance as compared to the porous sound absorbing material alone.

A sound absorbing material containing the nonwoven fabric for sound absorbing application according to the present invention may be used in a variety of applications. Example applications of the sound absorbing material containing the nonwoven fabric for sound absorbing application according to the present invention may include a sound absorbing material for an engine room and for an interior of an automobile, a sound absorbing protective material for automobiles, for household electrical appliances, and for various motors, etc., a sound absorbing material to be installed in walls, floors, ceilings, etc. of various buildings, a sound absorbing material for interior use in machine rooms etc., a sound absorbing material for various sound insulating walls, and/or a sound absorbing material for office equipment such as copiers and multifunction machines.

## Claims

1. A nonwoven fabric for sound absorbing application adapted to be laminated on a porous sound absorbing material, the nonwoven fabric comprising a plurality of drawn filaments arranged and oriented in one direction, wherein a mode value of a diameter distribution of the drawn plurality of filaments is 1 to 4 $\mu$m.

2. The nonwoven fabric for sound absorbing application according to claim 1, wherein a drawing ratio of each of the plurality of drawn filaments is in a range of 3 to 6, wherein an average diameter of the plurality of drawn filaments is in a range of 1 to 4 $\mu$m, and wherein a variation coefficient of the diameter distribution of the plurality of drawn filaments is in a range of 0.1 to 0.3.

3. The nonwoven fabric for sound absorbing application according to claim 1, wherein a grammage of the nonwoven fabric is in a range of 5 to 60 g/m$^2$.

4. The nonwoven fabric for sound absorbing application according to claim 3, wherein a specific volume obtained by dividing a thickness of the nonwoven fabric by the grammage is in a range of 2.0 to 3.5 cm$^3$/g.

5. The nonwoven fabric for sound absorbing application according to claim 1, wherein a tensile strength of the nonwoven fabric in a drawing direction of the plurality of drawn filaments is 20 N/50mm or more.

6. The nonwoven fabric for sound absorbing application according to claim 1, wherein an air permeability of the nonwoven fabric is in a range of 5 to 250 cm$^3$/cm$^2\cdot$s.

7. The nonwoven fabric for sound absorbing application according to claim 1, wherein each of the plurality of drawn filaments mainly contains a polyester or a polypropylene.

8. The nonwoven fabric for sound absorbing application according to claim 7, wherein the polyester is a polyethylene terephthalate having an intrinsic viscosity (IV) of 0.43 to 0.63.

9. The nonwoven fabric for sound absorbing application according to claim 1, further comprising a plurality of second drawn filaments arranged and oriented in a direction orthogonal to the one direction.

10. A sound absorbing material comprising:

a porous sound absorbing material; and
a nonwoven fabric for sound absorbing application laminated on the porous sound absorbing material,
wherein the nonwoven fabric for sound absorbing application includes a plurality of drawn filaments arranged and oriented in one direction, and
wherein a mode value of a diameter distribution of the plurality of drawn filaments is 1 to 4 $\mu$m.

**Patentansprüche**

1. Vliesstoff zur schallabsorbierenden Anwendung, geeignet auf ein poröses schallabsorbierendes Material laminiert zu werden,
wobei der Vliesstoff eine Vielzahl von gezogenen Filamenten umfasst, die in einer Richtung angeordnet und ausgerichtet sind,
wobei ein Moduswert einer Durchmesserverteilung der gezogenen Vielzahl von Filamenten 1 bis 4 $\mu$m ist.

2. Der Vliesstoff zur schallabsorbierenden Anwendung nach Anspruch 1,
wobei ein Ziehungsverhältnis von jedem der Vielzahl von gezogenen Filamenten in einem Bereich von 3 bis 6 ist,
wobei ein durchschnittlicher Durchmesser der Vielzahl von gezogenen Filamenten in einem Bereich von 1 bis 4 $\mu$m ist, und
wobei ein Variationskoeffizient der Durchmesserverteilung der Vielzahl von gezogenen Filamenten in einem Bereich von 0,1 bis 0,3 ist.

3. Der Vliesstoff zur schallabsorbierenden Anwendung nach Anspruch 1, wobei eine Grammatur des Vliesstoffs in einem Bereich von 5 bis 60 g/m$^2$ ist.

4. Der Vliesstoff zur schallabsorbierenden Anwendung nach Anspruch 3, wobei ein spezifisches Volumen, erhalten durch Dividieren einer Dicke des Vliesstoffs durch die Grammatur, in einem Bereich von 2,0 bis 3,5 cm$^3$/g ist.

5. Der Vliesstoff zur schallabsorbierenden Anwendung nach Anspruch 1, wobei eine Zugfestigkeit des Vliesstoffs in einer Ziehungsrichtung der Vielzahl von gezogenen Filamenten 20 N/50mm oder mehr ist.

6. Der Vliesstoff zur schallabsorbierenden Anwendung nach Anspruch 1, wobei eine Luftdurchlässigkeit des Vliesstoffs in einem Bereich von 5 bis 250 cm$^3$/cm$^2$·s ist.

7. Der Vliesstoff zur schallabsorbierenden Anwendung nach Anspruch 1, wobei jedes der Vielzahl von gezogenen Filamenten hauptsächlich einen Polyester oder ein Polypropylen enthält.

8. Der Vliesstoff zur schallabsorbierenden Anwendung nach Anspruch 7, wobei der Polyester ein Polyethylenterephthalat mit einer intrinsischen Viskosität (IV) von 0,43 bis 0,63 ist.

9. Der Vliesstoff zur schallabsorbierenden Anwendung nach Anspruch 1, der weiter eine Vielzahl von zweiten gezogenen Filamenten umfasst, die in einer Richtung orthogonal zu der einen Richtung angeordnet und ausgerichtet sind.

10. Ein schallabsorbierendes Material, umfassend:

ein poröses schallabsorbierendes Material; und
einen Vliesstoff zur schallabsorbierenden Anwendung, der auf das poröse schallabsorbierende Material laminiert ist,
wobei der Vliesstoff zur schallabsorbierenden Anwendung eine Vielzahl von gezogenen Filamenten beinhaltet, die in einer Richtung angeordnet und ausgerichtet sind, und
wobei ein Moduswert einer Durchmesserverteilung der Vielzahl von gezogenen Filamenten 1 bis 4 $\mu$m ist.

**Revendications**

1. Textile non tissé pour une application d'isolation acoustique adapté pour être stratifié sur un matériau d'isolation acoustique poreux,
le textile non tissé comprenant une pluralité de filaments étirés agencés et orientés dans une direction,
dans lequel la valeur modale d'une distribution des diamètres de la pluralité de filaments étirés est comprise entre 1 et 4 $\mu$m.

2. Textile non tissé pour une application d'isolation acoustique selon la revendication 1,
dans lequel le rapport d'étirement de chaque filament de la pluralité de filaments étirés est compris entre 3 et 6,
dans lequel le diamètre moyen de la pluralité de filaments étirés est compris entre 1 et 4 $\mu$m, et
dans lequel le coefficient de variation de la distribution des diamètres de la pluralité de filaments étirés est compris entre 0,1 et 0,3.

3. Textile non tissé pour une application d'isolation acoustique selon la revendication 1, dans lequel le grammage du textile non tissé est compris entre 5 et 60 g/m$^2$.

4. Textile non tissé pour une application d'isolation acoustique selon la revendication 3, dans lequel le volume spécifique obtenu en divisant l'épaisseur du textile non tissé par le grammage est compris entre 2,0 et 3,5 cm$^3$/g.

5. Textile non tissé pour une application d'isolation acoustique selon la revendication 1, dans lequel la résistance à la rupture en traction du textile non tissé en direction d'étirement de la pluralité de filaments étirés est supérieure ou égale à 20 N/50 mm.

6. Textile non tissé pour une application d'isolation acoustique selon la revendication 1, dans lequel la perméabilité à l'air du textile non tissé est comprise entre 5 et 250 cm$^3$/cm$^2$·s.

7. Textile non tissé pour une application d'isolation acoustique selon la revendication 1, dans lequel chaque filament de la pluralité de filaments étirés contient principalement un polyester ou un polypropylène.

8. Textile non tissé pour une application d'isolation acoustique selon la revendication 7, dans lequel le polyester est un polytéréphtalate d'éthylène présentant une viscosité intrinsèque (IV) comprise entre 0,43 et 0,63.

9. Textile non tissé pour une application d'isolation acoustique selon la revendication 1, comprenant en outre une deuxième pluralité de filaments étirés agencés et orientés dans une direction orthogonale à ladite une direction.

10. Matériau d'isolation acoustique comprenant :

   un matériau d'isolation acoustique poreux ; et
   un textile non tissé pour une application d'isolation acoustique stratifié sur le matériau d'isolation acoustique poreux,
   dans lequel le textile non tissé pour une application d'isolation acoustique comprend une pluralité de filaments étirés agencés et orientés dans une direction, et
   dans lequel la valeur modale de la distribution des diamètres de la pluralité de filaments étirés est comprise entre 1 et 4 $\mu$m.

# FIG.1

# FIG.2

NONWOVEN FABRIC FOR
SOUND ABSORBING APPLICATION

POROUS SOUND
ABSORBING MATERIAL

# FIG.3

# FIG.4

# FIG.5A

# FIG.5B

# FIG.6A

# FIG.6B

## FIG.7A

## FIG.7B

## FIG.7C

# FIG.8

| GRAMMAGE (g/m²) | THICKNESS (μm) | LONGITUDINAL TENSILE STRENGTH (N/50mm) | LONGITUDINAL ELONGATION PERCENTAGE (%) | AIR PERMEABILITY (cm³/cm²·s) |
|---|---|---|---|---|
| 5 | 17 | 28 | 5 | 219 |
| 10 | 30 | 56 | 7 | 57 |
| 15 | 42 | 85 | 9 | 26 |
| 20 | 55 | 113 | 12 | 15 |
| 40 | 110 | 260 | 38 | 9 |

# FIG.9

## FIG.10

## FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005195989 A
- EP 1081262 A1
- EP 1234905 A2
- WO 9944817 A